# EUROPEAN PATENT SPECIFICATION

(11) **EP 0 980 650 B1**
(45) Date of publication and mention of the grant of the patent: **03.05.2006**
(21) Application number: 99905286.3
(22) Date of filing: 22.02.1999
(51) Int. Cl.: A23G 1/00

(54) **PROCESS FOR PRODUCING WATER-CONTAINING CHOCOLATES**
VERFAHREN ZUR HERSTELLUNG WASSERENTHALTENDER SCHOKOLADEN
PROCEDE DE PRODUCTION DE CHOCOLATS A L'EAU

(30) Priority: 02.03.1998 JP 4925498
(43) Date of publication of application: 23.02.2000
(73) Proprietor: Fuji Oil Company, Ltd., Osaka-shi, Osaka 542-0086 (JP)
(72) Inventor: MORIKAWA, Kazutoshi, Fuji Oil Co., Ltd., Izumisano-shi, Osaka 598-8540 (JP); KUROOKA, Akira, Fuji Oil Co., Ltd., Izumisano-shi, Osaka 598-8540 (JP)
(74) Representative: Paget, Hugh Charles Edward
(86) International application number: PCT/JP1999/000804
(87) International publication number: WO 1999/044435

(56) References cited:
- EP-A- 0 393 327
- EP-A- 0 401 427
- EP-A- 0 427 544
- JP-A- 6 237 694
- JP-A- 63 094 040
- US-A- 5 468 509
- US-A- 5 474 795
- PATENT ABSTRACTS OF JAPAN vol. 012, no. 333 (C-526), 8 September 1988 (1988-09-08) -& JP 63 094940 A (MORINAGA & CO LTD), 26 April 1988 (1988-04-26)
- PATENT ABSTRACTS OF JAPAN vol. 015, no. 398 (C-0874), 9 October 1991 (1991-10-09) & JP 03 164137 A (KANEGAFUCHI CHEM IND CO LTD), 16 July 1991 (1991-07-16)
- PATENT ABSTRACTS OF JAPAN vol. 018, no. 296 (C-1209), 6 June 1994 (1994-06-06) & JP 06 062743 A (FUJI OIL CO LTD), 8 March 1994 (1994-03-08)

## Description

### BACKGROUND OF THE INVENTION

### Technical Field

The present invention relates to methods for manufacturing water-containing chocolates. In particular, the present invention relates to a method for manufacturing water-containing chocolate that even with moisture added is not gritty from clumping of its solid content, nor is elevated in viscosity, and that has satisfactory workability and is moreover good tasting. Although there are water-in-oil type and oil-in-water type emulsion systems for water-containing chocolates, the present invention relates to methods for manufacturing water-in-oil type water-containing chocolates.

### Description of Related Art

Various water-containing chocolates exist, from those whose moisture content is slight to those containing a large amount of moisture. For instance, the emulsion system of ganache, which is manufactured by mixing ordinary chocolate with different creams, is generally an oil-in-water type and hence, when used as a coating material, has the drawbacks of drying slowly and sticking to paper wrapping or of its moisture dehydrating. Further, a method that with a lipophilic emulsifier makes high moisture-containing components into a water-in-oil type emulsion added to chocolate, as a substance that can be mold-formed like ordinary chocolate, has been advocated (Japanese Laid-open Gazette Pat. Appl. No. 60-27339). Nevertheless, making the moisture-containing components into the water-in-oil type emulsion is complicated by the need for exclusive processing facilities, and increases the work another step.

Still further, methods for adding aqueous components directly to chocolate have been advocated (Japanese Laid-Open Gazette Pat. Appl. Nos. 56-28131 and 3-164137). Such methods, however, limit the aqueous components to liquid sugar or enriched fresh cream. Moreover, methods for adding aqueous components, not particularly limited, directly to chocolate by using specific emulsifiers have been advocated (Japanese Laid-Open Gazette Pat. Appl. Nos. 3-151831, 6-062743, 6-189682, 6-237694, 8-070776, 9-140332 and 9-248132). Water-containing chocolate in accordance with these suggestions is to an extent satisfying; nonetheless research toward improving quality further is ongoing.

Further, EP 0427544 A2 describes a process for producing water-containing chocolate; US 5,474,795 describes dextrose-containing chocolate products with sucrose fatty acid polyester fat substitutes; and JP 63-94940 describes production of chocolate.

### SUMMARY OF THE INVENTION

The present invention provides a method in which water-containing components can be added as is to a chocolate foodstuff without any processing for readily manufacturing good tasting water-in-oil water-containing chocolates whose material properties are like ordinary chocolate and whose emulsive stability is good.

As a result of concerted investigation, the present inventors gained knowledge that the above-noted issues may be addressed by employing sucrose-fatty acid esters whose HLB (hydorophile-lipophile balance) value is 3 or less and in which the number of carbon atoms in the chief constituent fatty acids is 16-18, and polyglycerin polyricinoleate, and attained completion of the present invention.

Namely, the present invention is a method for manufacturing water-containing chocolates characterized in that when mixing a chocolate foodstuff and aqueous components to manufacture water-in-oil type water-containing chocolates, sucrose-fatty acid esters whose HLB value is 3 or less and in which the number of carbon atoms in the chief constituent fatty acids is 16-18, and polyglycerin polyricinoleate are each employed within a range of 0.05 wt. % - 5.0 wt. % with respect to the chocolate foodstuff.

In the present invention, anything that is used for ordinary chocolate except for emulsifiers may be employed as components of the chocolate foodstuff. That is, chocolate foodstuff the main components of which being sweet chocolate or milk chocolate, cocoa mass and/or cocoa, and sweetener such as sugar, powdered milk, oils/fats, and which is subjected to roll-mill and conche-treatments following standard methods, may be utilized. The oil part in the chocolate foodstuff is preferably 35 wt. % - 70 wt. %. If the oil part exceeds the upper limit and a great amount is included, the flavor and texture of the water-containing chocolates that are the final product become disagreeably oily. Moreover, if the oil part does not meet the lower limit, the emulsification tends to become an oil-in-water type, making it undesirably difficult to form the water-in-oil type as intended.

As emulsifiers, sucrose-fatty acid esters whose HLB value is 3 or less and in which the number of carbon atoms in the chief constituent fatty acids is 16-18, and polyglycerin polyricinoleate are each employed within a range of 0.05 wt. % - 5.0 wt. % with respect to the chocolate foodstuff. If the quantity of these emulsifiers used is less than the lower limit, it becomes difficult to achieve water-in-oil type emulsification and the emulsifying destabilizes. Furthermore, using these emulsifiers in excess of the upper limit does not gain commensurate effects, and on the contrary is undesirable since the taste of the emulsifiers themselves emerges. It is preferable that the emulsifiers are admixed into the chocolate foodstuff in advance.

For the present invention, besides the above-described emulsifiers, one or two of more species of, for example, lecithins, glycerin-fatty acid esters, polyglycerin-fatty acid esters, propyleneglycol-fatty acid esters and sorbitan fatty acid esters may be used in combination.

As aqueous components--besides natural creams, milk, fruit juices, jams, varieties of fruits, and candies--water-containing food items such as creams in which the numerous heretofore developed animal/vegetable oils/fats are used, condensed milk, cheese, nuts, natural honeys, coffee and tea are illustrative examples; and one, two or more kinds of these can be used. It is preferable that these water-containing food items are blended so as to make the moisture content 2.0 wt. % - 50 wt. % with respect to the amount of water-containing chocolate as a whole. This is because it is difficult to obtain the characteristic flavors and texture of water-containing chocolate if the moisture content is less than the lower limit, and if the moisture content exceeds the upper limit, the oil-in-water type tends to form. Also, wherein mold separating in mold-forming is necessary, the moisture content is suitably 2.0 wt. % - 10 wt. %.

As general methods for manufacturing water-containing chocolates in the present invention, a method as below, is illustrative. Namely, sucrose-fatty acid esters whose HLB value is 3 or less and in which the number of carbon atoms in the chief constituent fatty acids is 16-18, and polyglycerin polyricinoleate are in advance each added to, and within a range of 0.05 wt. % - 5.0 wt. % with respect to, a chocolate foodstuff. Then, a roll-mill and conching processed chocolate foodstuff is prepared following standard methods. The chocolate foodstuff is warmed to melting, and the aqueous components are added/blended in so as to disperse them uniformly.

The water-containing chocolates in the present invention, despite containing moisture, exhibit properties similar to ordinary chocolate and can be form-worked by molding or the like. Substituting the oils/fats used in the present invention makes it possible to obtain water-containing chocolates that can be icings on cakes and coatings on ice-cream bars, or made into chips that are dispersed into frozen confections, or that can be used as center materials. Furthermore, compounding the aqueous components brings to life in the chocolate flavors that the aqueous components possess, and new chocolate flavors that have not existed until now may be had. Further, containing moisture makes the texture very soft, which is one of the features of the present invention.

The foregoing and other objects, features, aspects and advantages of the present invention will become more apparent from the following detailed description in conjunction with the accompanying drawings.

### DETAILED DESCRIPTION OF THE PREFERRED EMBODIMENTS

### Embodiments

The present invention will now be explained more specifically according to the following embodiments and comparative examples; the scope of the present invention is not, however, limited to these examples. Also, "%" and "parts" expressed in the examples are weight-based indications.

### (Embodiment 1)

A chocolate foodstuff of 50% oil portion was prepared by roll-milling and conching according to ordinary methods: 40 parts cocoa butter, 9 parts cocoa mass, 18 parts powdered whole milk, 33 parts sugar; 1.0 parts sucrose-stearic acid ester of HLB 1; 0.2 parts polyglycerin polyricinoleate; and 0.5 parts lecithin in combination. Seventy-five parts of the chocolate foodstuff was warming-melted to 35 - 40 °C, to which 25 parts of a strawberry puree was added. Blending this so as to be uniform, a water-in-oil type water-containing chocolate of 23% moisture content was manufactured.

This water-containing chocolate had fluidity in a warmed state and was without grittiness. After tempering and cool-hardening the water-containing chocolate a cutting process was carried out. The cutting process could be carried out smoothly without any differences from ordinary chocolate. The chocolate and strawberry flavors accorded well in this water-containing chocolate; it was delicious, had a very soft texture and pleasantly melted in the mouth.

### (Comparative Example 1)

Without using the sucrose-stearic acid ester of HLB 1, a water-containing chocolate was prepared from a combination and by a procedure otherwise entirely like Example 1. When strawberry puree was added and blended uniformly into the water-containing chocolate, it became an oil-in-water type ganache.

### (Embodiment 2)

A chocolate foodstuff of 50% oil portion was prepared by ordinary methods from: 40 parts cocoa oil, 9 parts cocoa mass, 18 parts powdered whole milk, 33 parts sugar; 1.0 parts sucrose-stearic acid ester of HLB 1; 0.2 parts polyglycerin polyricinoleate; and 0.5 parts lecithin in combination. Eighty-five [parts] of the chocolate foodstuff was warming-melted to 35 - 40 °C, to which 12 parts fresh cream and 3 parts brandy were added. Blending this so as to be uniform, a water-in-oil type water-containing chocolate of 8% moisture content was manufactured. This water-containing chocolate had fluidity in a warmed state and was without grittiness.

Three parts of a seeding material, the main component of which being 2-oleyl 1,3 triglycerol behenide, was added to 100 parts of the water-containing chocolate, which was tempered and mold-hardened in a mold. A form-hardening operation was possible smoothly without any differences from ordinary chocolate. The water-containing chocolate was delicious, effecting the flavor of the liquor, very pleasantly melted in the mouth, and had a soft texture even in a frozen stage.

Furthermore, this water-containing chocolate could be safely circulated as a chocolate for frozen consumption, because even if the chocolate itself melts somewhat by exposure to heat due to the elevated temperatures of summertime, the seeding automatically restores the tempering effects.

### (Comparative Example 2)

Without using polyglycerine polyricinoleate, a water-containing chocolate was prepared from a combination and by a procedure otherwise entirely like Example 2. Immediately after uniformly stirring the aqueous components, the water-containing chocolate had fluidity and no grittiness. Nevertheless, while being worked, its texture became coarse, losing fluidity, and it exhibited a plasticizing phenomenon. Further, when stirring was continued, it became an oil-in-water type ganache.

### (Example 3)

A chocolate foodstuff of 49% oil portion was prepared by ordinary methods from: 35 parts fat/oil (a blended oil of 15 parts cocoa butter and 20 parts coconut oil); 20 parts cocoa mass; 10 parts powdered whole milk; 35 parts sugar; 1.0 parts sucrose-palmitic acid ester of HLB 1; 0.2 parts polyglycerin polyricinoleate; and 0.5 parts lecithin in combination. Seventy five parts of the chocolate foodstuff was warming-melted to 35 - 40 °C, to which 25 parts of a banana puree was added. Blending this so as to be uniform, a water-in-oil type water-containing chocolate of 23% moisture content was manufactured. This water-containing chocolate had fluidity and was without grittiness.

In coating this water-containing chocolate onto ice cream, it dried quickly and worked smoothly without any differences from ordinary chocolate. The chocolate and banana flavors harmonized well in this coated chocolate; it was delicious and because of its soft texture, it exhibited a mouth-melt that felt integrated with the ice cream.

### (Comparative Example 3)

Without using sucrose-palmitic acid ester having HLB of 1, a water-containing chocolate was prepared from a combination and by a procedure otherwise entirely like Example 3. When banana puree was added and blended uniformly into the chocolate, it became an oil-in-water type ganache.

### (Example 4)

A chocolate foodstuff of 49% oil portion was prepared by ordinary methods from: 30 parts fat/oil (a blended oil of 10 parts cocoa butter and 20 parts hardened coconut oil); 35 parts cocoa mass; 35 parts sugar; 1.0 parts sucrose-stearic acid ester of HLB value of 1; 0.2 parts polyglycerin polyricinoleate; and 0.5 parts lecithin in combination. Seventy-five parts of the chocolate foodstuff was heated to 35 - 40 °C and 25 parts evaporated milk was added. Blending this so as to be uniform, a water-in-oil type water-containing chocolate of 18% moisture content was manufactured. This chocolate had fluidity and was without grittiness.

In coating this chocolate onto a butter cake, it dried quickly and worked smoothly without any differences from ordinary chocolate. The chocolate and milk flavors harmonized well in this coated chocolate; it was delicious and because of its soft texture, it exhibited a mouth-melt that felt integrated with the cake.

### (Comparative Example 4)

Without using sucrose-stearic acid ester of HLB 1, a water-containing chocolate was prepared from a combination and by a procedure otherwise entirely like Example 4. When evaporated milk was added and blended uniformly into the chocolate, it became an oil-in-water type ganache.

### (Examples 5 - 7; Comparative Examples 5 - 8)

A chocolate foodstuff of 50% oil content was prepared by roll-milling and conching according to ordinary methods, in combination: 40 parts cocoa butter; 9 parts cocoa mass; 18 parts powdered whole milk; 33 parts sugar; and emulsifiers from Table 1 below. Seventy-five parts of the chocolate foodstuff was warming-melted to 35 - 40 °C, to which 25 parts of a strawberry puree was added. Blending them so as to be uniform, water-in-oil type water-containing chocolates of 23% moisture content were manufactured.

**(Table 1)**

| | SE | | Amount PGPR Added | Results |
|---|---|---|---|---|
| | HLB | Amt. Added (%) | | |
| Embodiment 5 | 1 | 5 | 0.05 | Satisfactory |
| Embodiment 6 | 1 | 0.05 | 3 | Satisfactory |
| Embodiment 7 | 3 | 1 | 0.2 | Satisfactory |
| Compar. Ex. 5 | 5 | 1 | 0.2 | Poor |
| Compar. Ex. 6 | 1 | 6 | 0.05 | Poor |
| Compar. Ex. 7 | 1 | 0.05 | 6 | Poor |
| Compar. Ex. 8 | 1 | 0.03 | 2 | Poor |

SE in Table 1 indicates sucrose-fatty acid esters, and PGPR, polyglycerine ricinoleate. Also, the SE added amount is wt. % with respect to the chocolate foodstuff.

The water-containing chocolates of Embodiments 5 - 7, as the results "satisfactory" indicate in Table 1, had fluidity in a warmed state and were without grittiness. After tempering and cool-hardening the water-containing chocolate a cutting process was carried out. The cutting process could be carried out smoothly without any differences from ordinary chocolate. The chocolate and strawberry flavors matched well in this water-containing chocolate; it was delicious, had a very soft texture and pleasantly melted in the mouth.

On the other hand, in Comparative Example 5 in which sucrose-fatty acid ester of HLB 5 was utilized, the result was unsuitable, being difficult to make the emulsification water-in-oil type. Further, in Comparative Example 6, in which the amount added sucrose acid-esters was made to be 6%, and in Comparative Example 7, in which the amount added polyglycerine ricinoleate was made to be 6%, the taste of the respective emulsifiers was undesirably strong. Further still, in Comparative Example 8 in which the amount added sucrose-fatty acid esters were each made 0.03 [%], though the emulsification was a water-in-oil type, the degree of emulsifying was in sufficient.

### Industrial Utility

In accordance with the present invention, water-in-oil type water containing chocolates can be readily manufactured that, despite being mixed with water, can be form-worked by molding, coating, etc., likewise as with ordinary chocolate.

Various details of the present invention may be changed without departing from its spirit nor its scope. Furthermore, the foregoing description of the embodiments according to the present invention are provided for illustration only, and not for the purpose of limiting the invention as defined by the appended claims and their equivalents.

## Claims

1. A method for manufacturing water-in-oil type emulsion water-containing chocolate in which a chocolate foodstuff and aqueous components are mixed, including the step of adding into, within a range of 0.05 wt. % - 5.0 wt. % with respect to, said chocolate foodstuff each of:
sucrose-fatty acid ester or esters having an HLB value that is 3 or less and wherein the number of carbon atoms in the chief constituent fatty acids is 16-18, and
polyglycerin polyricinoleate.

2. The manufacturing method set forth in claim 1, wherein aqueous components are mixed in with the chocolate foodstuff such that moisture content with respect to total amount of said water-containing chocolate becomes 2 wt. % - 50 wt. %.

3. The manufacturing method set forth in claim 1 or 2, wherein oil part of said chocolate foodstuff is 35 wt. % - 70 wt. %.

4. The manufacturing method set forth in any of claims 1 - 3, wherein said chocolate foodstuff is a dark chocolate base including cocoa mass or cocoa ingredients.

5. A chocolate having a water-in-oil emulsion of aqueous components dispersed in a chocolate food, containing as emulsifiers:
0.05 to 5.00 wt. % sucrose-fatty acid ester or esters of 16-18 chief constituent fatty acid carbon number, having an HLB value that is 3 or less; and
0.05 to 5.00 wt. % polyglycerin polyricinoleate.

## Patentansprüche

1. Verfahren zur Herstellung einer wasserhältigen Schokolade vom Wasser-in-ÖI-Emulsionstyp, worin ein essbares Schokoladeprodukt und wässrige Komponenten vermischt werden, umfassend den Schritt des Zusetzens von einer Menge von 0,05 Gew.-% bis 5,0 Gew.-% in Bezug auf das essbare Schokoladeprodukt von jeweils:
einem oder mehreren Saccharosefettsäureester mit einem HLB-Wert von 3 oder weniger und einer Anzahl an Kohlenstoffatomen in den Hauptkomponentenfettsäuren von 16-18 und
Polyglycerinpolyricinoleat.

2. Herstellungsverfahren nach Anspruch 1, worin wässrige Komponenten so zum essbaren Schokoladeprodukt zugemischt werden, dass der Feuchtigkeitsgehalt in Bezug auf die Gesamtmenge der wasserhältigen Schokolade 2 Gew.-% bis 50 Gew.-% beträgt.

3. Herstellungsverfahren nach Anspruch 1 oder 2, worin der Ölteil des essbaren Schokoladeprodukts 35 Gew.-% bis 70 Gew.-% beträgt.

4. Herstellungsverfahren nach einem der Ansprüche 1-3, worin das essbare Schokoladeprodukt aus einer Basis aus dunkler Schokolade, die Kakaomasse oder Kakaobestandteile umfasst, besteht.

5. Schokolade, die eine Wasser-in-Öl-Emulsion aus im essbaren Schokoladeprodukt dispergierten wässrigen Komponenten aufweist, als Emulgatoren Folgendes umfassend:
0,05 bis 5,00 Gew.-% eines oder mehrerer Saccharosefettsäureester mit einer Hauptkomponentenfettsäuren-Kohlenstoffzahl von 16-18 und einem HLB-Wert von 3 oder weniger und
0,05 bis 5,00 Gew.-% Polyglycerinpolyricinoleat.

## Revendications

1. Procédé de fabrication de chocolat à l'eau de type émulsion eau dans huile, dans lequel une denrée alimentaire de type chocolat et des composants aqueux sont mélangés, comprenant l'étape consistant à ajouter dans ladite denrée alimentaire de type chocolat , dans une plage de 0,05 % en poids à 5,0 % en poids par rapport à celle-ci, chacun des éléments suivants :
un ou plusieurs esters d'acides gras de saccharose ayant une valeur HLB de 3 ou moins et dans lesquels le nombre d'atomes de carbone dans les principaux acides gras constitutifs va de 16 à 18, et
du polyricinoléate de polyglycérine.

2. Procédé de fabrication selon la revendication 1, dans lequel les composants aqueux sont incorporés par mélange avec la denrée alimentaire de type chocolat de façon à ce que la teneur en humidité par rapport à la quantité totale dudit chocolat à l'eau aille de 2 % en poids à 50 % en poids.

3. Procédé de fabrication selon la revendication 1 ou 2, dans lequel la partie huileuse de ladite denrée alimentaire de type chocolat va de 35 % en poids à 70 % en poids.

4. Procédé de fabrication selon l'une quelconque des revendications 1 à 3, dans lequel ladite denrée alimentaire de type chocolat est une base de chocolat noir comprenant de la pâte de cacao ou des ingrédients du cacao.

5. Chocolat ayant une émulsion eau dans huile de composants aqueux dispersée dans un aliment de type chocolat, contenant comme émulsifiants :
0,05 à 5,00 % en poids d'un ou plusieurs esters d'acides gras de saccharose dont le nombre d'atomes de carbone des principaux acides gras constitutifs va de 16 à 18, ayant une valeur HLB de 3 ou moins ; et
0,05 à 5,00 % en poids de polyricinoléate de polyglycérine.
